# EUROPEAN PATENT SPECIFICATION

(11) **EP 3 072 666 B1**
(45) Date of publication and mention of the grant of the patent: **21.03.2018**
(21) Application number: 16162030.7
(22) Date of filing: 23.03.2016
(51) Int. Cl.: B29C 45/84

(54) **TRANSPARENT MEMBER-EQUIPPED COVER OF INJECTION MOLDING MACHINE, AND INJECTION MOLDING MACHINE**
TRANSPARENTE ELEMENTAUSGERÜSTETE ABDECKUNG EINER SPRITZGIESSMASCHINE UND SPRITZGIESSMASCHINE
COUVERCLE TRANSPARENT, ÉQUIPÉ D'UN ÉLÉMENT, D'UNE MACHINE DE MOULAGE PAR INJECTION ET MACHINE DE MOULAGE PAR INJECTION

(30) Priority: 27.03.2015 JP 2015067688
(43) Date of publication of application: 28.09.2016
(73) Proprietor: SUMITOMO HEAVY INDUSTRIES, LTD., Tokyo 141-6025 (JP)
(72) Inventor: TAMURA, Atsuro, Chiba, 263-0001 (JP); HONDA, Katsuaki, Chiba-shi, Chiba 263-0001 (JP)
(74) Representative: Louis Pöhlau Lohrentz

(56) References cited:
- JP-A- 2004 261 852

## Description

### BACKGROUND OF THE INVENTION

### Field of the Invention

The present invention relates to a transparent member-equipped cover of an injection molding machine, and an injection molding machine.

### Description of Related Art

An injection molding machine has a cover and a transparent member which covers an opening portion of the cover (refer to, for example, Japanese Unexamined Patent Application Publication No. 2004-261852). A user of the injection molding machine can visually recognize the inside of the cover through the transparent member.

During an operation of the injection molding machine, there is a case where the transparent member shakes.

### SUMMARY OF THE INVENTION

The present invention has been made in view of the above problem and has a main object to provide a transparent member-equipped cover of an injection molding machine, in which shaking of a transparent member is reduced.

In order to solve the above problem, according to claim 1, there is provided a transparent member-equipped cover of an injection molding machine including: a cover of the injection molding machine; and a transparent member which covers an opening portion of the cover, wherein the transparent member is mounted on the cover at a plurality of mounting positions, and mounting states of the transparent member on the cover at one mounting position and the other mounting position are different from each other by elastically deforming the transparent member such that directions of action of an elastic restoring force of the transparent member at one mounting position and the other mounting position are different from each other.

According to the aspect of the present invention, a transparent member-equipped cover ofaninjection molding machine, in which shaking of a transparent member is reduced, is provided.

### BRIEF DESCRIPTION OF THE DRAWINGS

Fig. 1 is a view when a transparent member-equipped cover of an injection molding machine according to an embodiment is viewed from the inside.
Fig. 2 is a cross-sectional view taken along line II-II of Fig. 1.

### DETAILED DESCRIPTION OF THE INVENTION

Hereinafter, an embodiment of the present invention will be described with reference to the drawings. However, in each drawing, identical or corresponding configurations are denoted by identical or corresponding reference numerals and description thereof is omitted.

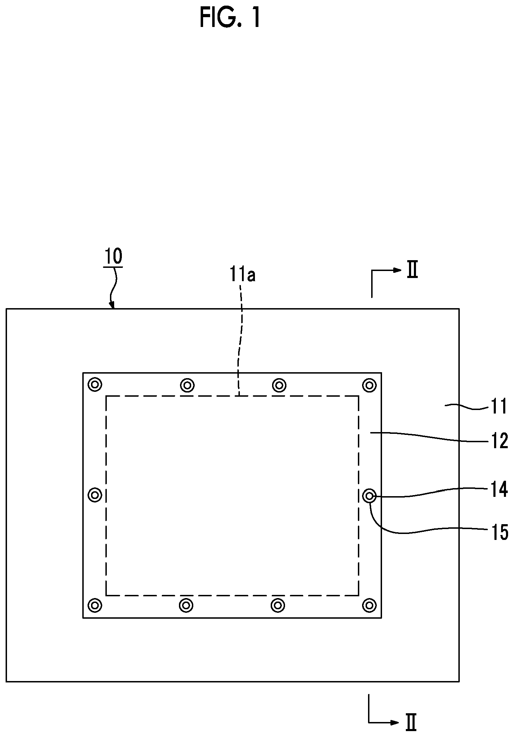

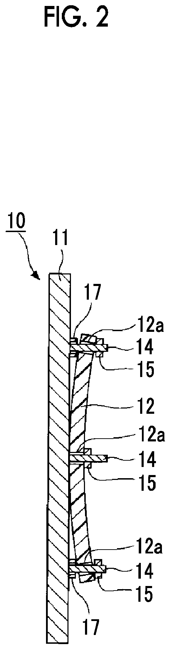

Fig. 1 is a view when a transparent member-equipped cover of an injection molding machine according to an embodiment is viewed from the inside. Fig. 2 is a cross-sectional view taken along line II-II of Fig. 1.

An injection molding machine has a transparent member-equipped cover 10. The transparent member-equipped cover 10 has a cover 11 and a transparent member 12 which covers an opening portion of the cover 11.

The cover 11 is a safety door which covers the side of, for example, a mold clamping unit. The mold clamping unit performs mold closing, mold clamping, and mold opening of a mold unit. The safety door is slidably disposed between a user and the mold clamping unit. If a user opens the safety door, a molding operation of the injection molding machine is temporarily prohibited. On the other hand, if a user shuts the safety door, the prohibition of the molding operation of the injection molding machine is released.

The transparent member 12 covers an opening portion 11a of the cover 11. A user can visually recognize the inside of the cover 11 through the transparent member 12. As the transparent member 12, a resin plate, a glass plate, or the like is used.

The transparent member 12 is mounted on the cover 11 by screwing or the like. For example, a male screw 14 is provided at the cover 11, and the male screw 14 penetrates a through-hole 12a of the transparent member 12. A female screw 15 is screwed to the tip of the male screw 14, and the female screw 15 presses the transparent member 12 against the cover 11.

In addition, the disposition of the male screw 14 and the female screw 15 may vary. For example, a configuration may be made in which a female screw is formed in the cover 11 and a male screw which is screwed to the female screw presses the transparent member 12 against the cover 11.

The transparent member 12 is mounted on the cover 11 at a plurality of mounting positions. The male screw 14 and the female screw 15 are disposed at each mounting position. In addition, a mounting method is not limited to the screwing.

Incidentally, in this embodiment, the mounting states of the transparent member 12 on the cover 11 at one mounting position and the other mounting position are different from each other. For example, the gaps between the cover 11 and the transparent member 12 at one mounting position and the other mounting position are different from each other. For example, as shown in Fig. 2, the gap between the cover 11 and the transparent member 12 is smaller at the central mounting position than at the mounting positions of both ends, and the size of the gap may be zero.

In a case where the gaps between the cover 11 and the transparent member 12 at one mounting position and the other mounting position are different from each other, for example, the transparent member 12 is formed in a flat plate shape in a natural state and mounted on the cover 11 in a state where it has been elastically deformed in a curved plate shape. At the mounting positions of both ends, the elastic restoring force of the transparent member 12 acts in a direction causing the transparent member 12 to approach the cover 11, whereas at the central mounting position, the elastic restoring force of the transparent member 12 acts in a direction separating the transparent member 12 from the cover 11. Play disappears due to the elastic restoring force of the transparent member 12, and therefore, shaking of the transparent member 12 can be reduced. Further, compared to the case of the flat plate shape, in the case of the curved plate shape, the rigidity of the transparent member 12 is high, and thus shaking of the transparent member 12 can be further reduced. Further, play disappears or the rigidity becomes higher, whereby in addition to a reduction in the shaking of the transparent member 12, suppression of the deformation of the transparent member 12 due to a difference in thermal expansion between the transparent member 12 and the cover 11 is also possible.

In a case where the gaps between the cover 11 and the transparent member 12 at one mounting position and the other mounting position are different from each other, the transparent member-equipped cover 10 may be provided with a spacer 17 which causes a difference in spacing. The spacer 17 secures the gap between the cover 11 and the transparent member 12. It is possible to elastically deform the transparent member 12 into a desired shape.

Further, the transparent member 12 of this embodiment is formed in a flat plate shape in a natural state. However, the transparent member 12 may be formed in a curved plate shape in a natural state and mounted on the cover 11 as it is. The rigidity of the transparent member 12 is higher in the case of the curved plate shape than in the case of the flat plate shape, and therefore, shaking of the transparent member 12 can be reduced. Further, in addition to a reduction in the shaking of the transparent member 12, suppression of the deformation of the transparent member 12 due to a difference in thermal expansion between the transparent member 12 and the cover 11 is also possible.

An embodiment of the transparent member-equipped cover of an injection molding machine has been described above. However, the present invention is not limited to the above-described embodiment, and various modifications and improvements can be made within the scope of the concept of the present invention as stated in the appended claims.

For example, the transparent member-equipped cover 10 of the above-described embodiment is a safety door which covers one face of the mold clamping unit. However, it may be a purge cover or the like which prevents the scattering of a molding material from an injection unit. The injection unit fills the inside of the mold unit with a molding material. A purge refers to an operation of replacing the molding material of the injection unit.

The transparent member 12 of the above-described embodiment is curved symmetrically in a vertical direction, as shown in Fig. 2. However, a direction in which the transparent member 12 is curved may vary. For example, the transparent member 12 may be curved symmetrically in a vertical direction, may be curved symmetrically in a horizontal direction, or may be curved point-symmetrically, in Fig. 1.

In the above-described embodiment, the gaps between the cover 11 and the transparent member 12 at one mounting position and the other mounting position are different from each other. However, the gap between the cover 11 and the transparent member 12 may be the same at all the mounting positions. For example, the transparent member 12 may be formed in a curved plate shape in a natural state and mounted on the cover 11 in a state where it has been elastically deformed in a flat plate shape. Play disappears due to the elastic restoring force of the transparent member 12, and therefore, shaking of the transparent member 12 can be reduced. Further, in addition to a reduction in the shaking of the transparent member 12, suppression of the deformation of the transparent member 12 due to a difference in thermal expansion between the transparent member 12 and the cover 11 is also possible. In this case, the directions of action of the elastic restoring force of the transparent member 12 at one mounting position and the other mounting position are different from each other.

## Claims

1. A transparent member-equipped cover of an injection molding machine, comprising:
a cover (11) of the injection molding machine; and
a transparent member (12) which covers an opening portion (11a) of the cover (11),
wherein the transparent member (12) is mounted on the cover (11) at a plurality of mounting positions, **characterized in**
**that** the mounting states of the transparent member (12) on the cover (11) at one mounting position and the other mounting position are different from each other by elastically deforming the transparent member (12) such that directions of action of an elastic restoring force of the transparent member (12) at one mounting position and the other mounting position are different from each other.

2. The transparent member-equipped cover of an injection molding machine according to Claim 1, wherein the transparent member (12) is formed as a flat plate in natural state and mounted on the cover (11) in a curved plate shape.

3. The transparent member-equipped cover of an injection molding machine according to Claim 1 or 2, wherein gaps between the cover (11) and the transparent member (12) at one mounting position and the other mounting position are different from each other.

4. The transparent member-equipped cover of an injection molding machine according to Claim 3, further comprising:
a spacer (17) which causes a difference in spacing at one mounting position and the other mounting position.

5. The transparent member-equipped cover of an injection molding machine according to Claim 1, wherein the transparent member (12) is formed in a curved plate shape in a natural state and mounted on the cover (11) as it is.

6. An injection molding machine comprising a transparent member-equipped cover according to one of the Claims 1 to 5.

## Patentansprüche

1. Transparentes Bauteil aufweisende Abdeckung einer Spritzgießmaschine, umfassend
eine Abdeckung (11) der Spritzgießmaschine und
ein transparentes Bauteil (12), das einen Öffnungsabschnitt (11a) der Abdeckung (11) abdeckt,
wobei das transparente Bauteil (12) auf der Abdeckung (11) an einer Mehrzahl von Befestigungspositionen befestigt ist,
**dadurch gekennzeichnet, dass**
die Befestigungszustände des transparenten Bauteils (12) auf der Abdeckung (11) an einer Befestigungsposition und an der anderen Befestigungsposition sich voneinander unterscheiden, indem das transparente Bauteil (12) elastisch so verformt wird, dass Wirkrichtungen einer elastischen Rückstellkraft des transparenten Bauteils (12) an einer Befestigungsposition und an der anderen Befestigungsposition sich voneinander unterscheiden.

2. Transparentes Bauteil aufweisende Abdeckung einer Spritzgießmaschine nach Anspruch 1,
wobei das transparente Bauteil (12) in natürlichem Zustand als flache Platte und auf der Abdeckung (11) montiert als gekrümmte Platte geformt ist.

3. Transparentes Bauteil aufweisende Abdeckung einer Spritzgießmaschine nach einem der Ansprüche 1 oder 2,
wobei Lücken zwischen der Abdeckung (11) und dem transparenten Bauteil (12) in der einen Befestigungsposition und in der anderen Befestigungsposition sich voneinander unterscheiden.

4. Transparentes Bauteil aufweisende Abdeckung einer Spritzgießmaschine nach Anspruch 3, weiter umfassend
einen Abstandshalter (17), der einen Unterschied im Abstand zwischen der einen Befestigungsposition und der anderen Befestigungsposition bewirkt.

5. Transparentes Bauteil aufweisende Abdeckung einer Spritzgießmaschine nach Anspruch 1,
wobei das transparente Bauteil (12) in einem natürlichen Zustand als gekrümmte Platte geformt ist und in diesem Zustand auf der Abdeckung (11) montiert wird.

6. Spritzgießmaschine, umfassend eine ein transparentes Bauteil aufweisende Abdeckung einer Spritzgießmaschine nach einem der Ansprüche 1 bis 5.

## Revendications

1. Couvercle équipé d'un élément transparent d'une machine de moulage par injection, comprenant :
un couvercle (11) de la machine de moulage par injection ; et
un élément transparent (12) qui recouvre une portion d'ouverture (11a) du couvercle (11),
l'élément transparent (12) étant monté sur le couvercle (11) au niveau d'une pluralité de positions de montage,
**caractérisé en ce que**
les états de montage de l'élément transparent (12) sur le couvercle (11) au niveau d'une position de montage et de l'autre position de montage sont différents entre eux du fait d'une déformation élastique de l'élément transparent (12) de façon à ce que les directions d'action d'une force de rappel élastique de l'élément transparent (12) au niveau d'une position de montage et de l'autre position de montage soient différentes entre elles.

2. Couvercle équipé d'un élément transparent d'une machine de moulage par injection selon la revendication 1, dans lequel l'élément transparent (12) est conçu comme une plaque plate dans un état naturel et est monté sur le couvercle (11) sous une forme de plaque incurvée.

3. Couvercle équipé d'un élément transparent d'une machine de moulage par injection selon la revendication 1 ou 2, dans lequel des interstices entre le couvercle (11) et l'élément transparent (12) au niveau d'une position de montage et de l'autre position de montage sont différents entre eux.

4. Couvercle équipé d'un élément transparent d'une machine de moulage par injection selon la revendication 3, comprenant en outre :
une entretoise (17) qui provoque une différence d'espacement au niveau d'une position de montage et de l'autre position de montage.

5. Couvercle équipé d'un élément transparent d'une machine de moulage par injection selon la revendication 1, dans lequel l'élément transparent (12) présente la forme d'une plaque incurvée dans un état naturel et est monté sur le couvercle (11) tel quel.

6. Machine de moulage par injection comprenant un couvercle équipé d'un élément transparent selon l'une des revendications 1 à 5.
